# EUROPEAN PATENT APPLICATION

(11) **EP 4 617 541 A1**
(43) Date of publication of application: **17.09.2025**
(21) Application number: 24163273.6
(22) Date of filing: 13.03.2024
(51) Int. Cl.: F16L 33/207, B29C 45/00

(54) **PRESS FITTING FOR A PIPE CONNECTION AND MANUFACTURING METHOD**

(71) Applicant: Uponor Innovation AB, 737 61 Virsbo (SE)
(72) Inventor: Talonpoika, Ismo, 15561 Nastola (FI); Tomminen, Aleksis, 15561 Nastola (FI); Uosukainen, Mika, 15561 Nastola (FI); Hämäläinen, Janne, 15561 Nastola (FI); Heino, Juha, 15561 Nastola (FI); Holopainen, Aki, 15561 Nastola (FI); Määttä, Suvi, 15561 Nastola (FI); Gallo, Pasquale, 15561 Nastola (FI); Rotso, Vesa, 15561 Nastola (FI); Kauppinen, Tuomas, 15561 Nastola (FI); Ross, Andreas, 97437 Hassfurt (DE); Schirrmeister, Kevin, 97437 Hassfurt (DE); Dittmar, Rainer, 97437 Hassfurt (DE)
(74) Representative: Fenner, Seraina

(57) **Abstract**

Press fitting (100) for a pipe connection, comprising a fitting body (120) for connecting the press fitting (100) to a pipe, a press sleeve comprising a substantially cylindrical press area and an outward expanding first collar (144) at a first end (146) of the press sleeve, and a stop ring (160) interconnecting the press sleeve (140) and the fitting body (120). The stop ring comprises a groove (162) formed at an inner contour (168) of the stop ring (160) for accommodating the outward expanding first collar (144) of the press sleeve (140), and a flexible lip (161) connected to the stop ring (160) in an area proximate to the groove (162), the flexible lip (161) otherwise being separated from an outer part (163) of the stop ring (160) by a slot (165) opening to a first face (167) of the stop ring.

Manufacturing method for manufacturing a corresponding stop ring (160).

## Description

The present disclosure relates to a press fitting for a pipe connection, comprising a fitting body for connecting the press fitting to a pipe, a press sleeve comprising a substantially cylindrical press area, and a stop ring interconnecting the press sleeve and the fitting body. The present disclosure further relates to a manufacturing method.

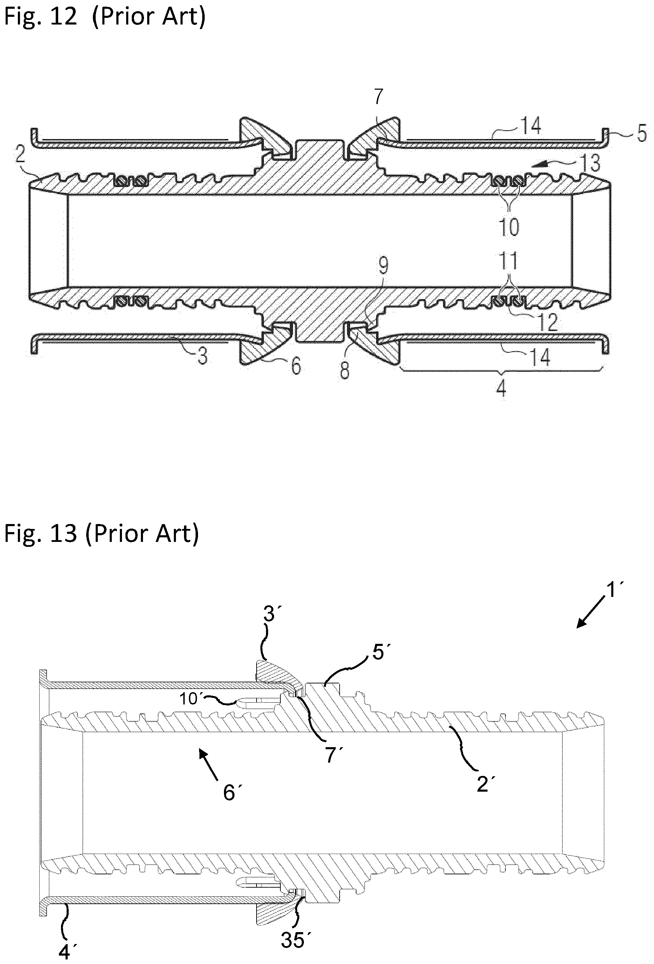

Such press fittings are generally known. For example, patent application US 2021/364111 A1 discloses a press fitting of the above type, whose cross-section is shown in Figure 12. The press sleeve 3 of the disclosed press fitting 1 comprises at least one projecting element in form of a flange 5, which delimits the substantially cylindrical press area 4 in an axial direction at its distal or open end. The press fitting 1 further comprises a banderole 14, which surrounds the substantially cylindrical press area 4 of the press sleeve 3, wherein the tubular banderole 14 is at least partially destroyed when the press sleeve 3 is pressed with a pressing tool. To ensure that the formed connection is watertight, a pressing profile 13 of a fitting body 2 comprises two recesses 10 for holding a sealing ring 11 each, which are separated by a web 12. As can be seen in Figure 12, the press sleeve 3 is attached by means of a retaining ring 6 to the fitting body 2. For this purpose, an expanded area 7 of the press sleeve 3 is inserted into a corresponding undercut formed in the retaining ring 6, and a locking lug 8 of the retaining ring 6 interlocks with a corresponding locking lug 9 of the fitting body 2.

An alternative design for a press fitting is known from patent application US 2023/0110392 A1. As disclosed therein and shown in Figure 13, the press fitting 1' comprises a fitting body 2', a press sleeve 4' arranged in a connection area 6' and a stop ring 3' fixed to the press sleeve 4' and limiting a pressing area in an axial direction of the press sleeve 4' at its proximal or fitting-side end facing an end face 35' of a central area 5' of the fitting body 2'. As shown in Figure 13, the press sleeve 4' interlocks directly with a corresponding groove 7' of the fitting body 2'. To limit the force required for pressing the press sleeve 4' onto the fitting body 2', the press sleeve 4' comprises several slots 10'.

While the known press fittings provide many advantages, the specific interconnection between the press sleeve and the fitting body may be difficult to form and may result in high forces during assembly of the fitting. For example, the insertion of the press sleeve 3 shown in Figure 12 into the corresponding undercut of the retaining ring 6 requires a relatively high assembly force and may damage the retaining ring 6. Moreover, it may be difficult to manufacture a retaining ring with an undercut deep enough to firmly hold the press sleeve 3 in place. In the alternate design shown in Figure 13, the mounting forces for attaching the press sleeve 4' directly to the fitting body 2' are also relatively high. Moreover, the provision of the slots 10 in the press sleeve 4' may require an additional manufacturing step.

Accordingly, it is a challenge to provide alternative designs for press fittings and corresponding manufacturing methods which address at least some of the above issues.

In this context, a press fitting for a pipe connection with a novel design is provided. The press fitting comprises a fitting body for connecting the press fitting to a pipe, a press sleeve, and a stop ring. The press sleeve comprises a substantially cylindrical press area and an outward expanding first collar at a first end of the press sleeve. The stop ring interconnects the press sleeve and the fitting body. The stop ring comprises a grove formed at an inner contour of the stop ring for accommodating the outward expanding first collar of the press sleeve, and a flexible lip connected to the stop ring in an area proximate to the groove, the flexible lip otherwise being separated from an outer part of the stop ring by a slot opening to a first face of the stop ring.

Accordingly, an improved design for a press fitting is provided. Provision of a stop ring with a flexible lip reduces the mounting forces required to form a sleeve group by inserting the press sleeve into the stop ring. This is facilitated, at least in part, by the provision of a slot or groove between the material of the flexible lip and an outer part of the stop ring, which enables the lip to move outwards during insertion of the first collar into the groove at the inner contour of the stop ring.

Optionally, the flexible lip forms at least one snap element for creating a snap-fit connection between the first end of the press sleeve and the stop ring. The use of a snap-fit connection implemented by means of at least one snap element provides a mechanically strong and reliable connection of the components of the sleeve group.

Optionally, the flexible lip is segmented in the circumferential direction by multiple first cutouts into a plurality of snap elements distributed over the inner contour of the stop ring. The provision of multiple snap elements separated by corresponding cutouts further reduces the insertion and core pullout forces during assembly of the sleeve group and removal of a core during injection molding, respectively. These advantages are achieved by the fact that the individual snap elements can move independently of each other, thereby facilitating a simple and effective widening of the inner diameter of the distal part of the inner contour during insertion and removal.

Optionally, the at least one snap element comprises a protrusion formed at a wall opposite the slot and delimiting the groove in an insertion direction of the press sleeve, wherein a recess angle of the protrusion is larger than a guiding angle of the protrusion. Provision of such an asymmetrically shaped protrusion results in a relatively low mounting force required during assembly of the sleeve group and a relatively high pullout force for removing the press sleeve from the stop ring.

Optionally, the guiding angle of the protrusion lies in the range of 20 to 30° and/or the recess angle of the protrusion lies in the range of 40 to 50°. The selection of the above angles limits the mounting forces during assembly of the sleeve group. At the same time, the much steeper, for example two to three times steeper, recess angles with respect to the guiding angles, result in a high pullout force required to separate the press sleeve from the stop ring, thereby holding the sleeve group firmly together.

Optionally, the depth of an undercut formed by the protrusion lies in the range of 0.3 to 0.5 mm, in particular for a press fitting for a pipe having a diameter of 16 or 32 mm. An undercut of a corresponding depth can be obtained by injection molding using the above design features of the disclosed stop ring. It enables a firm connection between the stop ring and the press sleeve of the sleeve group. Without the provision of the slot in the first face, the undercut would need to be much smaller, e.g., lie in the range of 0.1 to 0.2 mm for the same fitting diameter.

Optionally, the flexible lip forms a first part of the inner contour of the stop ring, and the stop ring further comprises one or more snap hooks formed at a second part of the inner contour of the stop ring, the one or more snap hooks being configured to connect the stop ring to a corresponding protrusion of the fitting body. The provision of snap hooks at a separate part of the inner contour of the stop ring, in particular behind the groove for accommodating the first collar, enables to form a snap-fit connection between the stop ring and the fitting body. In particular, the provision of snap hooks enables to clip the assembled sleeve group comprising the stop ring with a relatively low mounting force into a corresponding groove of the fitting body.

Optionally, the second part of the inner contour is segmented by multiple second cutouts formed between neighboring snap hooks distributed over the inner contour of the stop ring. As detailed above with regard to the segmented snap elements, the provision of multiple snap hooks separated by second cutouts further reduces the mounting force required during the assembly in that the inside diameter of the second part of the inner contour can be easily widened.

Optionally, the one or more snap hooks comprise a centering step for positioning the stop ring on the fitting body. Accordingly, a preassembled sleeve group can be attached to the fitting body in a coaxial manner at a well-defined position.

Optionally, the stop ring further comprises multiple stop ribs arranged at the inner contour of the stop ring, in particular in the second part of the inner contour. The stop ribs limit an insertion depth of the press sleeve in the insertion direction. This enables, amongst others, to position a press sleeve at a well-defined position with respect to the stop ring.

Optionally, the outward expanding first collar of the press sleeve has a guiding angle in the range of 10 to 35° (or a guiding angle in the range of 15 to 30° with the error range of +/-5°). Such a relatively steep guiding angle results in a good interlocking between the press sleeve and the stop ring.

Optionally, a terminal end of the outward expanding first collar is sharp without any chamfer. Such a sharp end provides a good interlocking of the collar in the groove behind the undercut.

Optionally, a radius of a kink or bend between the substantially cylindrical press area and the outward expanding first collar lies in the range of 2.0 to 3.0 mm.

Optionally, the press sleeve further comprises at least one of an inspection window and a punch mark formed in the substantially cylindrical press area. Provision of an inspection window enables a visual inspection of the insertion of a pipe into the press fitting. Provision of a punch mark formed in the substantially cylindrical press area enables a pipe, which is inserted into the press fitting, to be held in place until the press sleeve is actually pressed to form a permanent connection.

Optionally, the press sleeve further comprises an outward expanding second collar, in particular a flange, formed at a second end of the press sleeve. Provision of a second collar enables a pressing jaw of a tool for pressing the press sleeve to be guided.

Optionally, the stop ring is made from a plastic material, in particular a thermoplastic material such as polyoxymethylene (POM). Such materials provide the required strength and are suitable to form the stop ring, for example, by injection molding.

Optionally, the press sleeve is made from a metal material, in particular stainless steel. Such materials provide the required strength and are suitable to form the press sleeve, for example, by deep drawing.

Optionally, the fitting body is made from a metal or plastic material, in particular brass or polyphenylsulfone (PPSU). Such materials provide the required strength, are certified for direct contact with drinking water and are suitable to form the fitting body, for example, by turning or molding, respectively.

Moreover, a manufacturing method, in particular for forming parts or all of the above press fitting for a pipe connection, is provided. The manufacturing method comprises:
- injection molding a plastic material into a mold for forming a stop ring of a press-fitting, wherein the mold comprises a core part and an outer part, the core part comprising a protrusion for forming a groove at an inner contour of the stop ring, and the outer part comprises a protruding edge for forming a slot opening to a first face of the stop ring;
- withdrawing, in an axial direction of the stop ring, the outer part, such that the plastic material injected between the core part and the outer part forms a flexible lip connected to the remaining plastic material of the stop ring in an area proximate to the groove; and
- thereafter, withdrawing, in the axial direction of the stop ring, the core part, wherein, during the withdrawal of the core part, the flexible lip of the stop ring is flexed outwards into the formed slot by the protrusion of the core part.

The improved design of the stop ring also enables an enhanced manufacturing method based on injection molding. The use of a mold comprising at least two parts, in particular a core part and an outer part, enables the formation of a groove and a slot in different parts of the stop ring. Using this mold, a flexible lip is formed. After removing the outer part of the mold, the lip can bend outwards. Thus, when removing the second, core part of the mold, the flexible lip of the stop ring moves out of the way of the protrusion, thereby preventing potential damage to the formed stop ring. At the same time, this enables formation of a particularly deep undercut at the inner contour of the stop ring.

Optionally, the method further comprises inserting a first end of a press sleeve of the press fitting into the inner contour of the stop ring, wherein the press sleeve comprises a substantially cylindrical press area and an outward expanding first collar arranged at the first end, and wherein, during the insertion, the flexible lip of the stop ring is flexed outwards into the formed slot by the first collar. As detailed above, the specific form of the stop ring enables the insertion of a press sleeve having an outward expanding first collar without the risk of damaging the material of the stop ring.

Optionally, the method further comprises attaching the stop ring to a fitting body of the press-fitting, wherein, during the attaching, one or more flexible hooks of the stop ring snap-fit around a protrusion of the fitting body. As detailed above, the flexible hooks of the stop ring facilitate the easy mounting of the sleeve group onto a corresponding protrusion of the fitting body using a snap-fit connection and a relatively low mounting force.

Further details and advantages of the disclosed press fitting, its components, such as the stop ring or the preassembled sleeve group, and their manufacturing, are disclosed in the following description of exemplary embodiments as well as the attached set of claims.

Specific embodiments are described with respect to attached set of figures, wherein the same reference signs are used to identify the same or similar components of different embodiments for easier reference.
Figures 1A and 1B show different views of an assembled press fitting according to the present disclosure.
Figure 2 shows a perspective view of a sleeve group according to a first embodiment.
Figure 3 shows a cross section through a press sleeve according to the first embodiment.
Figures 4A to 4C show different views of a stop ring according to the first embodiment.
Figure 5A to 5C show different views of a sleeve group according to a second embodiment.
Figures 6A to 6C show different views of a stop ring according to the second embodiment.
Figures 7A and 7B show cross-sections through part of a first stop ring design during insertion of a press sleeve.
Figures 8A and 8B show cross-sections through part of a second stop ring design during insertion of a press sleeve.
Figures 9A and 9B show different views of a press sleeve according to a further embodiment.
Figure 10 shows, in a schematic manner, a method for manufacturing a press fitting.
Figures 11A to 11D show various stages of removing parts of a mold used for forming a stop ring.
Figures 12 and 13 show two different press fittings according to the prior art.

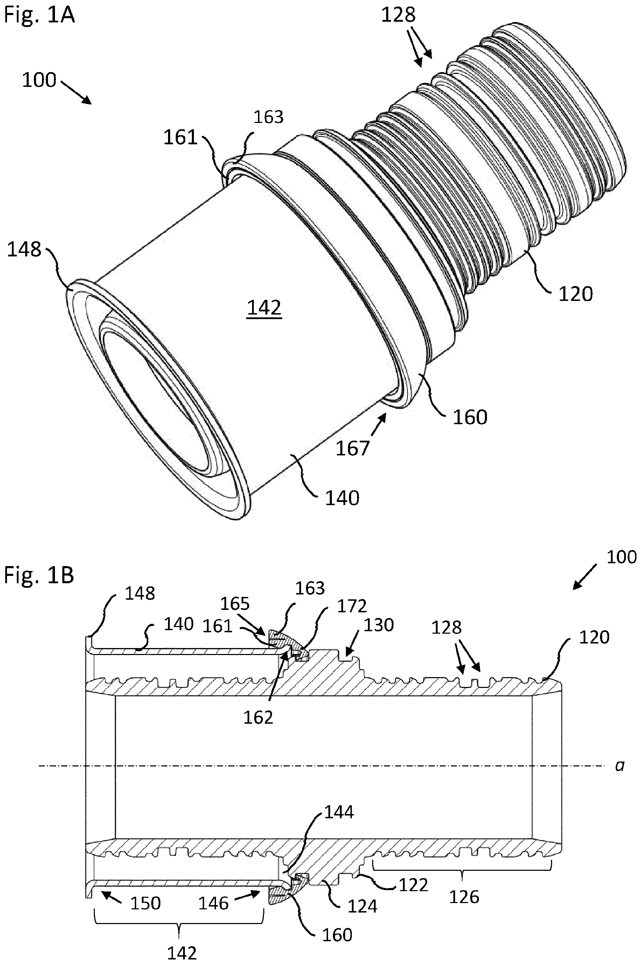

Figures 1A and 1B show a press fitting 100 according to the present disclosure in its assembled state. As can be seen, the press fitting 100 comprises three main components, namely a fitting body 120, a press sleeve 140 and a so-called retaining or stop ring 160.

As best shown in the cross-section of Figure 1B, the exemplary fitting body 120 comprises a central area 124, separating two connection areas at respective ends of the press fitting 100. At each side of the fitting body 120, a sleeve group may be attached. Each sleeve group comprises a press sleeve 140, which has a cylindrical press area 142, and a stop ring 160.

For better understanding, only a single sleeve group with a single press sleeve 140 and a single stop ring 160 is shown in Figures 1A and 1B. In general, however, one press sleeve 140 and one stop ring 160 is provided for each connection area of a fitting body. In the specific embodiment shown in the figures, the fitting body 120 is configured to connect two pipes to each other in a straight line or axial direction a, indicated by the dashed line. Of course, the disclosed fitting design is also applicable to other types of fitting bodies, such as angular or U-shaped connectors, and/or multiway fittings, such as T-fittings or manifolds.

The fitting body 120 comprises, for each sleeve group, a circumferential groove 130 for attaching a corresponding stop ring 160. In the depicted example, the grooves 130 are limited in the axial direction a by the central area 124 and a corresponding protrusion 122 of the fitting body 122.

As also shown in Figures 1A and 1B, the fitting body 120 further comprises various other protrusions and/or grooves forming a pressing profile 126 as generally known from the art. In the exemplary pressing profile 126, two recesses 128 are provided, which may accommodate corresponding sealing rings (not shown).

As best seen in Figure 1B, the press sleeve 140 is held at its proximal or first end 146. For this purpose, the first end 146 of the press sleeve 140 is widened, for example during a deep drawing process of the press sleeve 140, to form an outward expanding collar 144. The collar 144 is positioned in a groove 162 and is held by a flexible lip 161 of the stop ring 160. The flexible lip 161 is attached to the rest of the stop ring 160 in an area close to the bottom of the groove 162. Otherwise, in particular at its upper surface facing away, in a radial direction, from the press sleeve 140, it is separated from an outer part 163 of the stop ring 160 by means of a further front groove or slot 165 opening up towards a front face 167 of the stop ring 160, i.e., a face oriented towards the press sleeve 140 and/or oriented away from the central part 124 of the fitting body 120.

As explained in more detail later, the stop ring 160 further comprises several snap hooks 172, which interlock with the groove 130 of the fitting body 120. Accordingly, the press sleeve 140 is attached indirectly to the fitting body 120 by means of the stop ring 160. Alternatively, other connection means may be provided, such as locking lugs as described with respect to Figure 12.

Figures 1A and 1B also shows that the press sleeve 140 comprises a second collar in the form of a flange 148 at a distal, second end 150 of the press sleeve 140. Together, the flange 148 and the stop ring 160 limit the press area 142 in both axial directions and may help to position, alone or in combination, a pressing tool (not shown) therein.

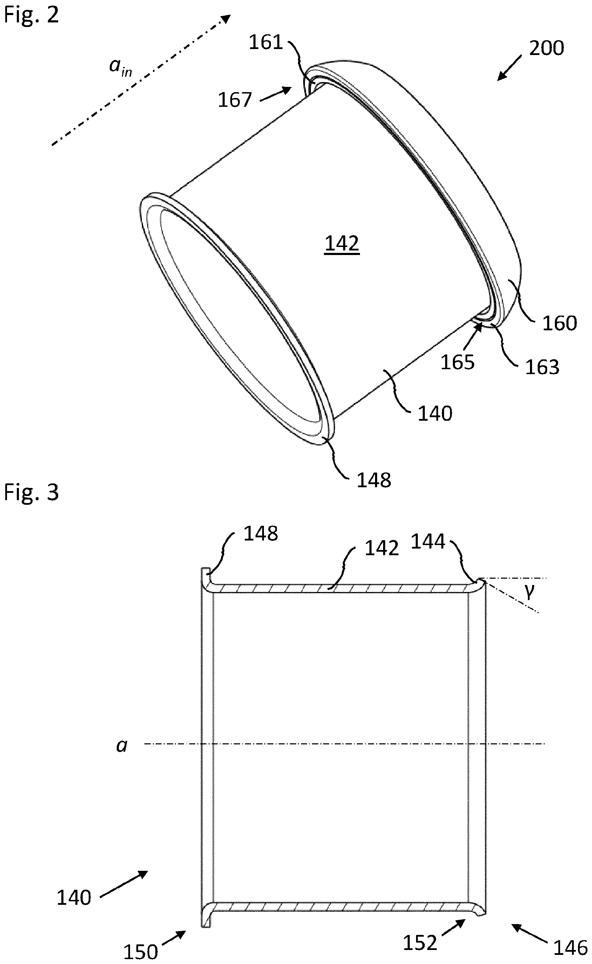

Figure 2 shows a corresponding sleeve group 200 according to a first embodiment in isolation, comprising the press sleeve 140 and the stop ring 160. In the view shown in Figure 2, the press sleeve 140 has already been attached to the stop ring 160 by pushing it in an insertion direction *aᵢₙ* into the stop ring 160. During inserting, the flexible lip 161 is pushed outwards by the first collar 144. Once the collar 144 of the press sleeve 140 has been fully inserted into the groove 162 as shown, the flexible lip 161 flexes back towards its original position and acts as a snap element for holding the first collar 144 in place.

Figure 3 shows the press sleeve 140 according to the first embodiment in isolation. The cross-section shows some geometric details of the first and second collars 144 and 148. For example, it shows that the first collar 144 has a guiding angle γ of approximately 30°. Depending on the diameter of the pipe to be connected and other parameters of the press fitting 100, the guiding angle γ may vary between 15 to 30° as detailed later and may have a tolerance of 5°. In a transition area between the first collar 144 and the pressing area 142, a material of the press sleeve 140, in particular stainless steel, is bent to form a relatively narrow kink 152. In the described example, a bending radius at the area of the kink 142 lies in the range of 2.0 to 3.0 mm.

Further attention is drawn to the fact that the first collar 144 has a sharp end, produced, for example, by a cutting of a metal material used for deep drawing the press sleeve 140. In particular, the first collar 144 does not have any chamfer. Provision of such a relatively sharp end of the first collar 144 improves the interlocking between the press sleeve 140 and the stop ring 160 as shown, for example, in Figure 1B.

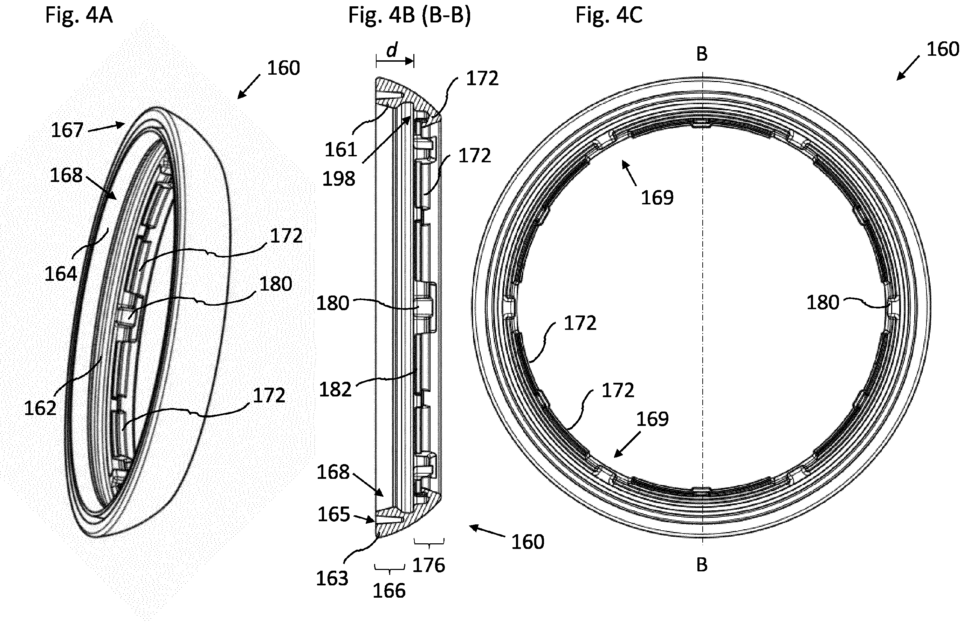

Figures 4A to 4C show various details of the stop ring 160 according to the first embodiment. Among others, Figure 4A shows that the flexible lip 161 has on its inside surface, i.e., a surface facing the outside cylinder mantel of the press sleeve 140, a protrusion in the form of a snap element 164. In its entirety, the flexible lip 161 forms a closed ring, which, in the mounted state, surrounds the first collar 144 of the press sleeve 140.

As can be best seen in Figure 4B, an inner contour 168 of the stop ring 160 can be divided into a first part 166 for accommodating the the first end 146 of the press sleeve 140 and a second part 174 for attaching the stop ring 160 to the fitting body 120. These two parts 166 and 174 are separated by the groove 162 accommodating the first collar 144. The snap element 164 is arranged in the first part 166, i.e., in the insertion direction *aᵢₙ,* in front of the groove 162. The snap hooks 172 are arranged in the second part 174, i.e., in the insertion direction *aᵢₙ,* behind the groove 162.

In the depicted embodiment, a total of twelve snap hooks 172 are provided. The twelve snap hooks 172 are dived into six groups, each group comprising two snap hooks 172. The individual groups are separated by corresponding cut-outs or gaps 169.

In the gaps 169 in the second part 174 of the inner contour 168, stop ribs 180 are provided, which extend over the back wall the groove 162 towards the center of the stop ring 160. The stop ribs 180 limit an insertion depth d of the press sleeve 140 inside the stop 160 as shown in Figure 4B. In the described configuration, one stop rib 180 is provided in each of the six gaps 169. However, in other embodiments, this does not need to be the case. For example, a stop rib 180 may also be provided between each of the snap hooks 172.

Figures 4A to 4C also show further details of the shape of the snap hooks 172. As best seen in the cross-section along axis B-B of Figure 4B, the material of each snap hook 172 forms a hook around a groove or depression 198 extending in the insertion direction *aᵢₙ,* i.e., orthogonal to the groove 162 for accommodating the first collar 144 of the press sleeve 140. The depression 198 increases the flexibility of the snap hooks 172. Moreover, each snap hook 172 ends in a centering step 182, which positions the snap hook 172 on the protrusion 122 of the fitting body 120 as shown in Figure 1B. In a relaxed position as shown in Figure 4B, a leading surface of each snap hook 172 may have a relatively low guiding angle of about 15 to 40°, which will result in a relatively low snap-on force for attaching the stop ring 160 to the fitting body 120.

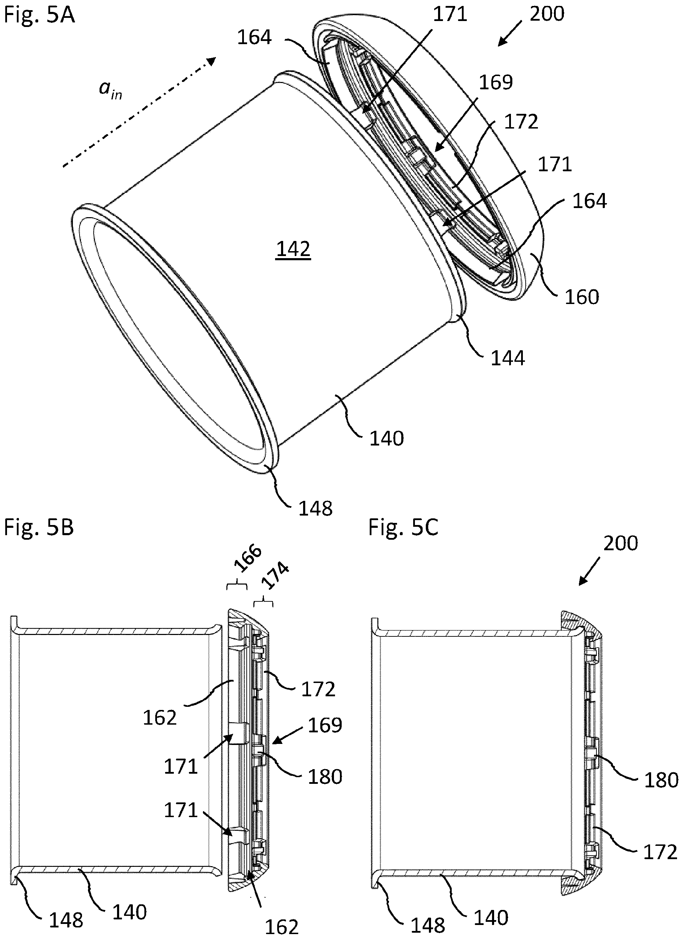

Figures 5A to 5C shows another sleeve group 200 during and after assembly according to a second embodiment. As can be seen, for example, in Figure 5A, the flexible lip 161 of the stop ring 160 is segmented by second cut-outs or gaps 171 to form a plurality of snap elements 164. The combination of multiple snap elements 164 and intermediate second gaps 171 result in a higher flexibility of the lip 161 during manufacturing and during assembly of the sleeve group 200. Accordingly, the first part 166 of the inner contour 168 of the stop ring 160 can be deformed easily to allow the individual snap elements 164 to glide over the collar 144 of the press sleeve 144 during insertion in the insertion direction *aᵢₙ.*

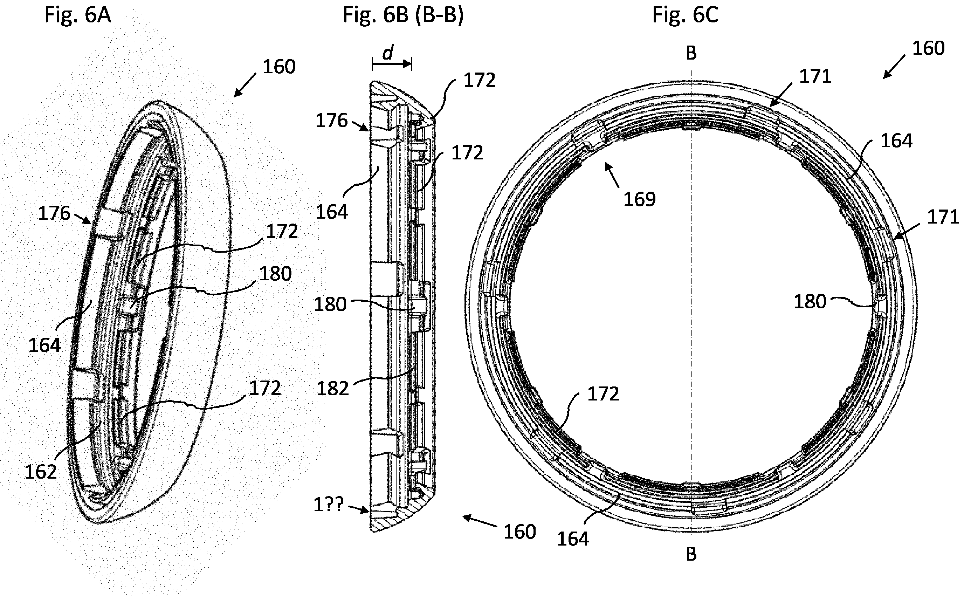

Figures 6A to 6C show various details of the stop ring 160 according to the second embodiment. Below, only the differences concerning the provision of multiple snap elements 164 are described. The remaining features correspond to the corresponding features of the stop ring 160 according to the first embodiment shown in Figures 4A to 4C and are not described again.

In the depicted configuration, the stop ring 160 has seven snap elements 164, separated by seven second gaps 171, both arranged in the first part 166 of the inner contour 168. Generally, any number of snap elements 164 may be used, for example 3 to 8 snap element 164. Moreover, as described before, the stop ring 160 has twelve snap hooks 172 arranged in groups of two and separated by six first cut-outs or gaps 169, both arranged in the second part 174 of the inner contour 168. Of course, fewer or more snap elements 164 or snap hooks 172 may also be provided. In the described configuration, the snap elements 164 and the snap hooks 172 are not aligned with each other along the circumference of the contour 168. In other embodiments this may be the case, in particular if the number of snap elements 164 equals the number of snap hooks 172.

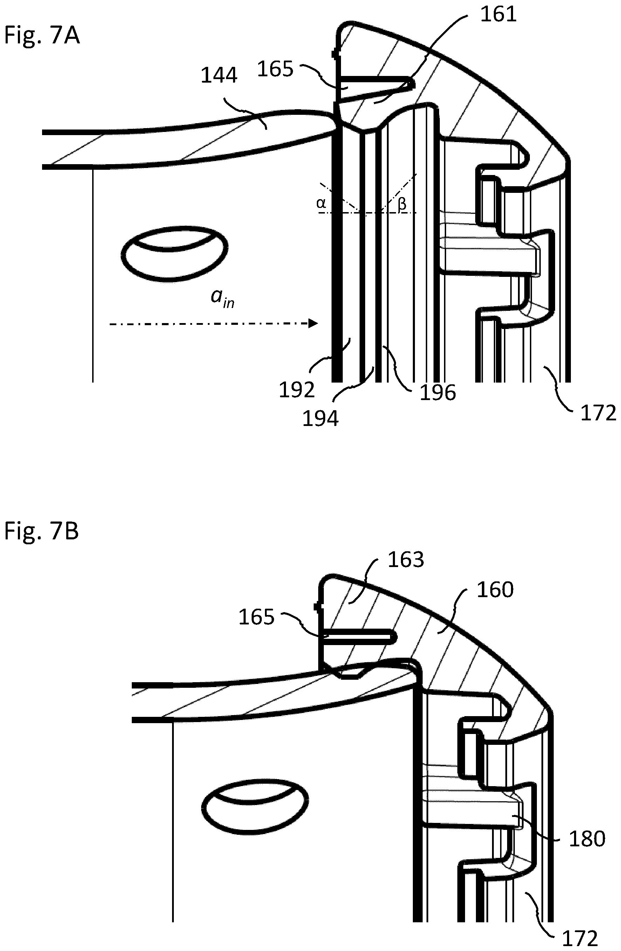

Figures 7A and 7B show a cross-section through a part of a stop ring 160 during insertion of a collar 144 of a press sleeve 140 according to a first design, which may be combined with each of the press fittings 100 described before.

As can be seen best in Figure 7A, on insertion, the leading edge of a first collar 144, bent outwards with a bending radius of about 3.0 mm, hits a first surface 192 of a flexible lip 161, which has a relatively high guiding angle α with respect to the axial direction a, for example 25° +/-5°. While the press sleeve 140 is pushed in the insertion direction *aᵢₙ,* the flexible lip 161 is bent upwards into the open space created by the slot 165. It then slips over an essentially horizontal, second surface 194 forming the highest part of the flexible lip 161 before it snaps in behind a third surface 196, which connects the second surface 194 with a curved part leading to the bottom of the groove 162. The third surface 196 has a relatively step recess angle β, for example 45° +/- 5°. In this position shown in Figure 7B, the flexible lip 161 flexes back downwards again. Note, however, that the slot 165 is much narrower in this state as compared to prior to insertion of the press sleeve 140. That is to say, the flexible lip 161 is not fully relaxed in this position and exerts a clamping force onto the first collar 144. In another embodiment, the slot 165 may be closed completely in the assembled state of the sleeve group 200 (not shown). In this case, the flexible lip 171 cannot bent upwards sufficiently to release the press sleeve 140 on application of a moderate pullout force.

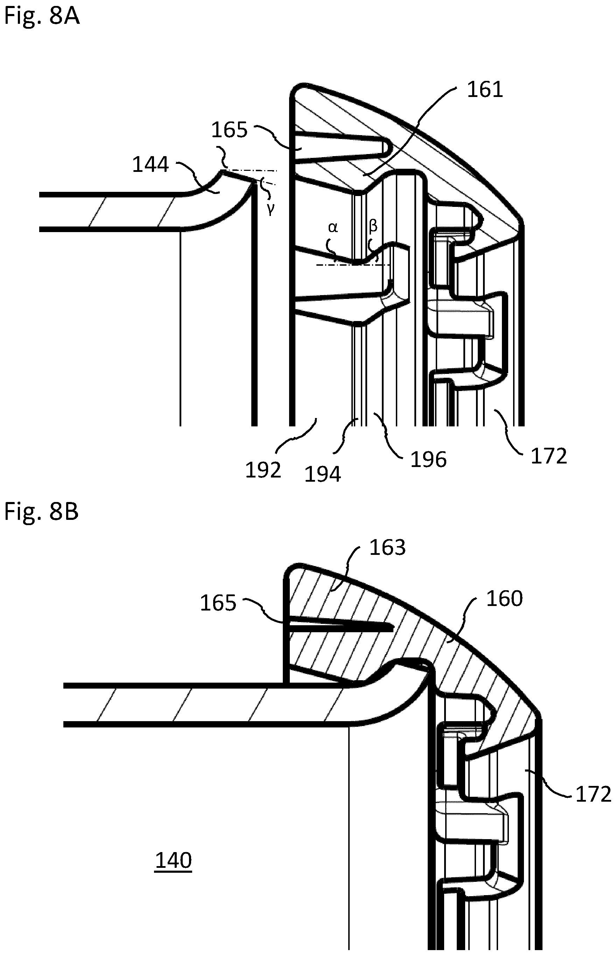

Figures 8A and 8B show, in a similar manner, a cross-section through a part of a stop ring 160 during insertion of a collar 144 of a press sleeve 140 according to a second design, which may be combined with each of the press fittings 100 described before. Compared to the first design, a guiding angle γ of the first collar 144 is steeper and/or the bending radius of collar 144 is smaller, for example 2.0 mm. While the recess angle β remains essentially the same as in the previous design, the guiding angle α of the flexible lip 161 is much shallower, leading to a highly asymmetric design of the snap element 164 formed on the inner surface of the flexible lip 161.

In the described example, the guiding angle α of the flexible lip 161 lies in the range of 20 to 30°, and the recess angle β of the flexible lip 161 lies in the range of 40 to 50°. The depth of an undercut 170 formed by the snap element 146 with respect to the groove 162 lies in the range of 0.3 to 0.5 mm for the described stop ring 160. In general, the depth of the undercut 170 depends on the diameter of the stop ring 160.

As can be seen in Figure 8B, the relatively strongly outward bent first collar 144 with its sharp edge interlocks behind the undercut 170 formed by the snap elements 164 with respect to the groove 162. Accordingly, a force required to pull out the press sleeve 140 from the stop ring 160 is relatively high, and, in particular higher than the mounting force required to insert the press sleeve 140 into the stop ring 160.

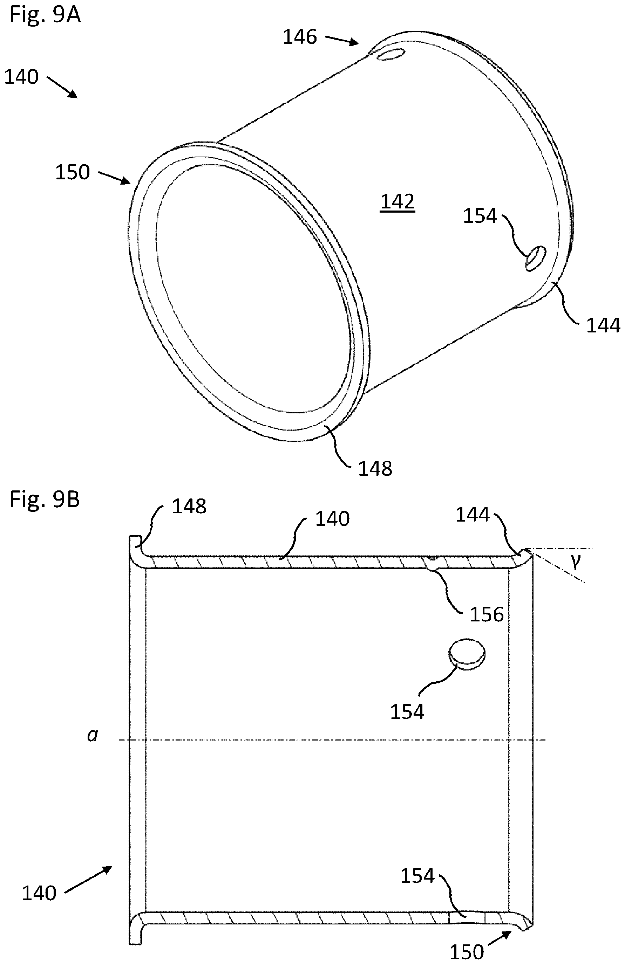

Figures 9A and 9B show different views of a press sleeve according to another embodiment, which may be combined with each of the press fittings 100 and stop rings 160 previously described.

The press sleeve 140 according to Figures 9A and 9B comprises one or more inspection windows 154, which enable an installer to visually verify whether a pipe has been fully inserted into the press sleeve 140 of the sleeve group 200. Moreover, Figure 9B shows that at least one punch mark 156 has been formed by a corresponding punch tool in the pressing area 142. This punch mark 156 protruding on the inside surface of the press sleeve 140 helps to hold a pipe pushed into the press fitting 100 prior to the pressing of the press sleeve 140 with the corresponding press tool (not shown).

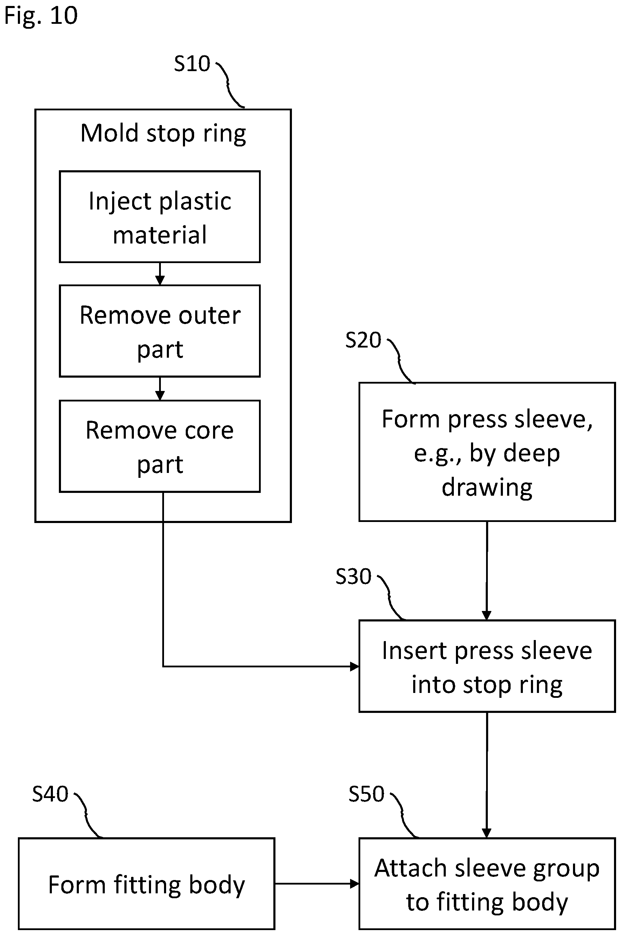

Figure 10 shows, in a schematic manner, a flowchart of a method for manufacturing a press fitting, such as any of the press fittings 100 described before.

As shown in Figure 10, a stop ring 160 is formed in a step S10 as a separate part by injection molding.

For example, a thermoplastic material such as Polyoxymethylene (POM) can be injected in step S12 into a mold 300.

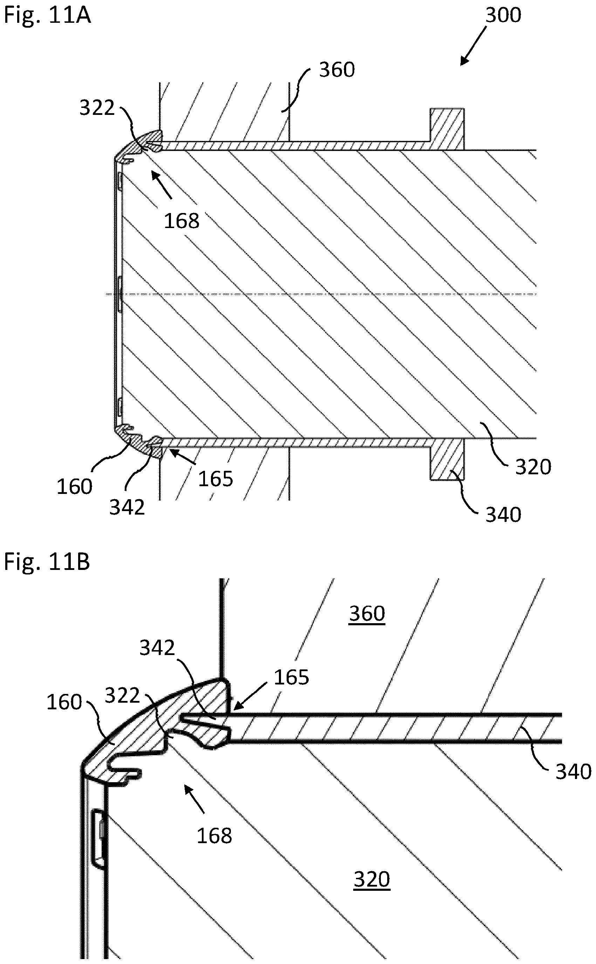

The mold 300 may comprise a solid, non-collapsible core part 320 and an outer part 340 shown in Figures 11A to 11D. As seen best in the enlarged cross-section shown in Figure 11B, the core part 320 has a surface corresponding to a negative imprint of the inner contour 168 as described before. In particular, it comprises a protrusion 322 for forming a groove 162 of the stop ring 160. The outer part 340 surrounds the core part 320 and has a protrusion in the shape of and edge 342, which is configured to form the slot 165.

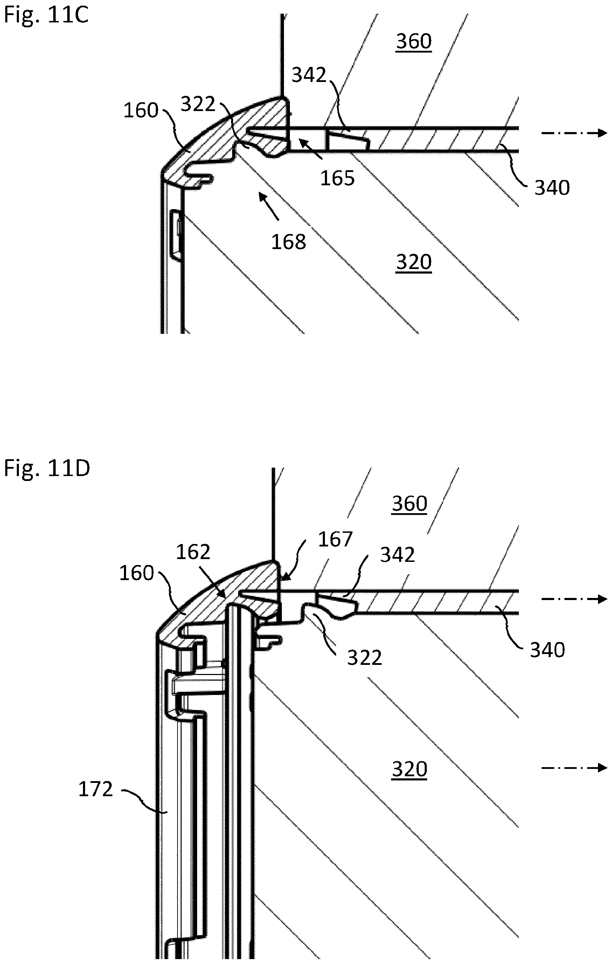

After injecting the thermoplastic material, the outer part 340 of the mold 300 is removed first in step S14. As shown in Figure 11C, the outer part 340 can be withdrawn in an axial direction a, and in particular in the opposite direction of the insertion direction *aᵢₙ.* For this purpose, the front face 167 of the stop ring is held by a stripper plate 360. Alternatively, the core part 320 and the stripper plate 360 can be moved in the opposite direction, holding the outer part 340 in place. In either case, the slot 165 is opened, allowing the lip 161 to move flexibly.

Thus, when removing the remaining core part 320 from the stop ring in step S16, its protrusion 322 can push the lip 161 outwards, enabling the formation of a relative deep undercut 170 without risking damaging the material of the stop ring 160. As shown in Figure 11D, this may be achieved withdrawing the core part 320 from the stop ring held in place by the stripper part 360, as vice versa.

In a step S20, the press sleeve 140 is formed. For example, it may be formed by deep drawing a sheet of stainless steel into an essentially cylindrical shape. The collars 144 and/or 148 may be formed as a part of the deep drawing process, or may be formed later, for example by a widening procedure. Furthermore, after deep drawing of the cylinder shape, one end of the press sleeve 140 may be opened, for example by cutting. Optionally, one or more inspection windows 154 and/or one or more punch marks 156 may be formed by stamping or punching in an optional manufacturing step.

Thereafter, in a step S30, the press sleeve 140 is inserted with its first end 146 into the inner contour 168 of the stop ring 160 (or vice versa) to from the sleeve group 200. This may be performed, for example, by a pressing operation at an automatic assembly line. As discussed before, the presence of the flexible lip 161 facilitates insertion of the first collar 144 into the groove 162 of the stop ring 162 by reducing the required mounting force.

In a step S40, the fitting body 120 is formed. This may be performed in any appropriate manner as known from the prior art, for example by turning a brass cylinder or by molding a plastic material to form the fitting body 120.

In a last step S50, the sleeve group 200 is attached to the fitting body 120 by pushing the proximal end of the sleeve group 200 over one end of the fitting body 120, until the snap hooks 172 of the stop ring 160 snap into a corresponding groove 130 of the fitting body 120. This step may be performed, for example, by another pressing operation at an automatic assembly line.

The present invention has been described above with respect to various embodiments as shown in the attached figures. Nonetheless, attention is drawn to the fact that the protective scope is not limited by the specific embodiments disclosed therein and is defined by the attached set of claims.

### List of references

- 100: press fitting
- 120: fitting body
- 122: protrusion
- 124: central area
- 126: pressing profile
- 128: recess
- 130: groove (of the fitting body)
- 140: press sleeve
- 142: press area
- 144: first collar
- 146: first end
- 148: flange (second collar)
- 150: second end
- 152: kink
- 154: inspection window
- 156: punch mark
- 160: stop ring
- 161: flexible lip
- 162: groove (of the stop ring)
- 163: outer part (of the stop ring)
- 164: snap element
- 165: slot
- 166: first part
- 167: (front) face
- 168: inner contour
- 169: (first) gap
- 170: undercut
- 171: (second) gap
- 172: snap hook
- 174: second part
- 178: measurement pad
- 180: stop rib
- 182: centering step
- 192: first surface
- 194: second surface
- 196: third surface
- 198: depression
- 200: sleeve group

- 300: mold
- 320: core part (of the mold)
- 322: protrusion (of the core part)
- 340: outer part (of the mold)
- 342: edge (of the outer part)
- 360: stripper plate

- S10 to S50: manufacturing steps

## Claims

1. A press fitting (100) for a pipe connection, comprising:
- a fitting body (120) for connecting the press fitting (100) to a pipe;
- a press sleeve (140) comprising a substantially cylindrical press area (142) and an outward expanding first collar (144) at a first end (146) of the press sleeve (140); and
- a stop ring (160) interconnecting the press sleeve (140) and the fitting body (120), the stop ring (160) comprising:
- a groove (162) formed at an inner contour (168) of the stop ring (160) for accommodating the outward expanding first collar (144) of the press sleeve (140); and
- a flexible lip (161) connected to the stop ring (160) in an area proximate to the groove (162), the flexible lip (161) otherwise being separated from an outer part (163) of the stop ring (160) by a slot (165) opening to a first face (167) of the stop ring (160).

2. The press fitting (100) according to claim 1, wherein the flexible lip (161) forms at least one snap element (164) for creating a snap-fit connection between the first end (146) of the press sleeve (140) and the stop ring (160).

3. The press fitting (100) according to claim 2, wherein the flexible lip (161) is segmented in the circumferential direction by multiple first cut-outs into a plurality of snap elements (164) distributed over the inner contour (168) of the stop ring (160).

4. The press fitting (100) according to claim 2 or 3, wherein the at least one snap element (164) comprises a protrusion formed at a wall opposite the slot (165) and delimiting the groove (162) in an insertion direction (*aᵢₙ*) of the press sleeve (140), a recess angle (β) of the protrusion being larger than a guiding angle (α) of the protrusion.

5. The press fitting (100) according to claim 4, wherein
- the guiding angle (α) of the protrusion lies in the range of 20 to 30°;
- the recess angle (β) of the protrusion lies in the range of 40 to 50°; and/or
- a depth of an undercut formed by the protrusion lies in the range of 0.30 to 0.50 mm.

6. The press fitting (100) according to any one of claims 1 to 5, wherein the
- the flexible lip (161) forms a first part (166) of the inner contour (168) of the stop ring (160); and
- the stop ring (160) further comprises one or more snaps hooks (172) formed at a second part (174) of the inner contour (168) of the stop ring (160), the one or more snap hooks (172) being configured to connect the stop ring (160) to a corresponding protrusion (122) of the fitting body (120).

7. The press fitting (100) according to claim 6, wherein the second part (174) of the inner contour (168) is segmented by multiple second cut-outs formed between neighboring snap hooks (172) distributed over the inner contour (168) of the stop ring (160).

8. The press fitting (100) according to claim 6 or 7, wherein the one or more snap hooks (172) comprise a centering step (182) for positioning the stop ring (160) on the fitting body (120) .

9. The press fitting (100) according to any one of claims 1 to 8, wherein the stop ring (160) further comprises multiple stop ribs (180) arranged at the inner contour (168) of the stop ring (160), in particular in a second part (174) of the inner contour (168), the stop ribs (180) limiting an insertion depth of the press sleeve (140) in an insertion direction (*aᵢₙ*) of the press sleeve (140).

10. The press fitting (100) according to any one of claims 1 to 9, wherein at least one of:
- the outward expanding first collar (144) of the press sleeve (140) has a guiding angle (γ) in the range of 10-35°;
- a terminal end (150) of the outward expanding first collar (144) is sharp without any chamfer; and
- a radius of a kink (152) or bend between the substantially cylindrical press area (142) and the outward expanding first collar (144) lies in the range of 2.0 - 3.0mm.

11. The press fitting (100) according to any one of claims 1 to 10, wherein the press sleeve (140) further comprises at least one of:
- an inspection window (154) formed in the substantially cylindrical press area (142) and configured for visually inspecting the insertion of a pipe into the press-fitting (100);
- a punch mark (156) formed in the substantially cylindrical press area (142) and configured for fixing a pipe inserted into the press-fitting (100) prior to pressing the press sleeve (140); and
- an outward expanding second collar, in particular a flange (148), formed at a second end (150) of the press sleeve (140), the second collar (148) being configured for guiding a pressing jaw of a tool for pressing the press sleeve (140).

12. The press fitting (100) according to any one of claims 1 to 11, wherein
- the stop ring (160) is made from a plastic material, in particular polyoxymethylene (POM) or another thermoplastic material;
- the press sleeve (140) is made from a metal material, in particular stainless steel; and/or
- the fitting body (120) is made from a metal or plastic material, in particular brass or polyphenylsulfone, PPSU.

13. A manufacturing method, comprising:
- injection molding a plastic material into a mold (300) for forming a stop ring (160) of a press-fitting (100), wherein the mold (300) comprises a core part (320) and an outer part (340), the core part (320) comprising a protrusion (322) for forming a groove (162) at an inner contour (168) of the stop ring (160), and the outer part (340) comprises a protruding edge (342) for forming a slot (165) opening to a first face (167) of the stop ring (160) ;
- withdrawing, in an axial direction (*a*) of the stop ring (160), the outer part (340), such that the plastic material injected between the core part (320) and the outer part (340) forms a flexible lip (161) connected to the remaining plastic material of the stop ring (160) in an area proximate to the groove (162); and
- thereafter, withdrawing, in the axial direction (*a*) of the stop ring (160), the core part (320), wherein, during the withdrawal of the core part (320), the flexible lip (161) of the stop ring (160) is flexed outwards into the formed slot (165) by the protrusion (322) of the core part (320).

14. The manufacturing method of claim 13, further comprising:
- inserting a first end (146) of a press sleeve (140) of the press fitting (100) into the inner contour (168) of the stop ring (160), wherein the press sleeve (140) comprises a substantially cylindrical press area (142) and an outward expanding first collar (144) arranged at the first end (146), and wherein, during the insertion, the flexible lip (161) of the stop ring (160) is flexed outwards into the formed slot (165) by the first collar (144).

15. The manufacturing method of claim 13 or 14, further comprising:
- attaching the stop ring (160) to a fitting body (120) of the press-fitting (100), wherein, during the attaching, one or more flexible hooks (172) of the stop ring (160) snap-fit around a protrusion (122) of the fitting body (120).
